# EUROPÄISCHE PATENTSCHRIFT

(11) **EP 3 108 309 B1**
(45) Veröffentlichungstag und Bekanntmachung des Hinweises auf die Patenterteilung: **02.03.2022**
(21) Anmeldenummer: 15704730.9
(22) Anmeldetag: 30.01.2015
(51) Int. Cl.: G05B 19/042

(54) **FELDGERÄT DER AUTOMATISIERUNGSTECHNIK**
AUTOMATION FIELD DEVICE
APPAREIL DE TERRAIN DE LA TECHNIQUE D'AUTOMATISATION

(30) Priorität: 18.02.2014 DE 102014102021
(43) Veröffentlichungstag der Anmeldung: 28.12.2016
(73) Patentinhaber: Endress+Hauser SE+Co. KG, 79689 Maulburg (DE)
(72) Erfinder: PAUL, Tobias, 79650 Schopfheim (DE); STIB, Ralph, 79677 Schönau (DE)
(74) Vertreter: Andres, Angelika Maria
(86) Internationale Anmeldenummer: PCT/EP2015/051879
(87) Internationale Veröffentlichungsnummer: WO 2015/124401

(56) Entgegenhaltungen:
- EP-A2- 1 860 513
- DE-A1-102006 062 184
- DE-A1-102009 050 645
- US-A1- 2003 117 751
- US-A1- 2004 184 517

## Beschreibung

Die Erfindung bezieht sich auf ein Feldgerät der Automatisierungstechnik.

In der Prozessautomatisierungstechnik werden vielfach Feldgeräte eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Neben den zuvor genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

Derartige Feldgeräte wandeln eine physikalische oder chemische Messgröße in ein dem Messwert entsprechendes, auf eine Zweidrahtleitung übertragbares analoges Ausgangssignal um und sind aus EP1860513 A2 bekannt.

Um Feldgeräte auch in Sicherheitskritischen Anwendungen betreiben zu können, müssen diese bestimmte Spezifikationen aufweisen. Hierfür dient insbesondere die internationale Norm IEC/EN 61508 als Basis für diese Spezifikation, Entwurf und Betrieb von sicherheitstechnischen Systemen ("Safety Instrumented Systems", kurz: "SIS"), wie bspw. eine Feldgerät. Die IEC/EN 61508 als Grundnorm verwendet einen auf der Risikobewertung basierenden Ansatz:
Es wird eine Abschätzung des Risikos vorgenommen und anhand dessen das sich ergebende, notwendige Sicherheits-Integritätslevel ("Safety Integrity Level", kurz: "SIL") für Komponenten und Systeme mit Sicherheitsaufgaben ermittelt.

Diese SIL-bewerteten Komponenten und Systeme sollen das vorhandene Risiko einer Einrichtung, wie bspw. ein Feldgerät, auf ein vertretbares Maß bzw. ein "tolerierbares Risiko" reduzieren. Hierbei wirken sich insbesondere unsicher zu detektierende Fehler negativ auf das "tolerierbare Risiko" aus. Für eine erhöhte Sicherheit, d.h. zur Minimierung des "tolerierbaren

Risikos" der Feldgeräte muss das ausgegebene bzw. das zu übertragbare analoge Ausgangssignal, dass über zwei Anschlussklemmen der Zweidrahtleitung zugeführt wird, zurückgelesen werden. Dies wird bei den aus dem Stand der Technik, bekannten Feldgeräten typischerweise über einen Shunt-Widerstand realisiert, der zur Strommessung in dem Feldgerät vorgesehen ist. Dieser Shunt-Widerstand befindet sich im Feldgerät hinter sämtlichen Ex (Explosionsschutz) - und/oder EMV- (Elektromagnetische Verträglichkeit) Maßnahmen. Fehlerströme die durch defekte Ex- und/oder EMV-Maßnahmen entstehen, können somit nicht detektiert werden und fließen als unsicher zu detektierende Fehler bei der Ermittlung des "tolerierbaren Risikos" ein.

Der Erfindung liegt somit die Aufgabe zugrunde, das Rücklesen des zu übertragenden analogen Ausgangssignals zu optimieren.

Die Aufgabe wird erfindungsgemäß durch ein Feldgerät der Automatisierungstechnik gemäß Anspruch 1 gelöst.

Erfindungsgemäß wird also ein galvanisch getrennter Stromwandler anstelle eines Shunt-Widerstandes eingesetzt, der den Schleifenstrom in einer der beiden Leitungen zwischen der Sicherheitseinrichtungen und den Anschlussklemmen rückliest. Der zum Rücklesen verwendete Stromwandler befindet sich somit im günstigsten Fall direkt und unmittelbar hinter den Anschlussklemmen und somit noch vor sämtlichen EMV und Ex-Maßnahmen bzw. Sicherheitseinrichtungen des Feldgerätes. In manchen Fällen ist dies technisch nicht zu realisieren, so dass der Stromwandler zumindest vor Teilen der Sicherheitseinrichtung des Feldgerätes angeordnet ist. Wie eingangs erwähnt, kann ein Feldgerät sowohl als Sensor als auch als Aktor fungieren. Es versteht sich von selbst, dass sich die Erfindung auf beide Ausgestaltungen eines Feldgerätes bezieht.

Eine vorteilhafte Ausgestaltung sieht vor, dass der Stromwandler ein induktiver und/oder kapazitiver Stromwandler ist. Als induktive Stromwandler kommen insbesondere Stromwandler die auf folgenden Technologien basieren in Betracht:
- C-Type Current Transducers
- Closed Loop Hall Effekt
- Eta Technologie
- Isolation Amplifier Technologie
- IT-type Closed Loop
- Open Loop Hall Effect
- PRiME

Eine vorteilhafte Ausgestaltung sieht vor, dass zwischen der Leitung und dem Stromwandler ein Isolationsmittel vorgesehen ist, das bis zu einer vordefinierten Spannung einen elektrischen Überschlag verhindert.

Eine vorteilhafte Ausgestaltung sieht vor, dass Abstandsvorgaben des Stromwandlers in Bezug auf die Leitung der Norm IEC DIN EN 60079 aus dem Jahr 2012 für explosionsgefährdete Bereiche entsprechen.

Die Erfindung wird anhand der nachfolgenden Zeichnungen näher erläutert. Es zeigt:
- Fig. 1:: ein Feldgerät, das gemäß dem Stand der Technik ausgebildet ist,
- Fig. 2:: eine erste Ausgestaltung des erfindungsgemäßen Feldgerätes, und
- Fig. 3:: eine zweite Ausgestaltung des erfindungsgemäßen Feldgerätes.

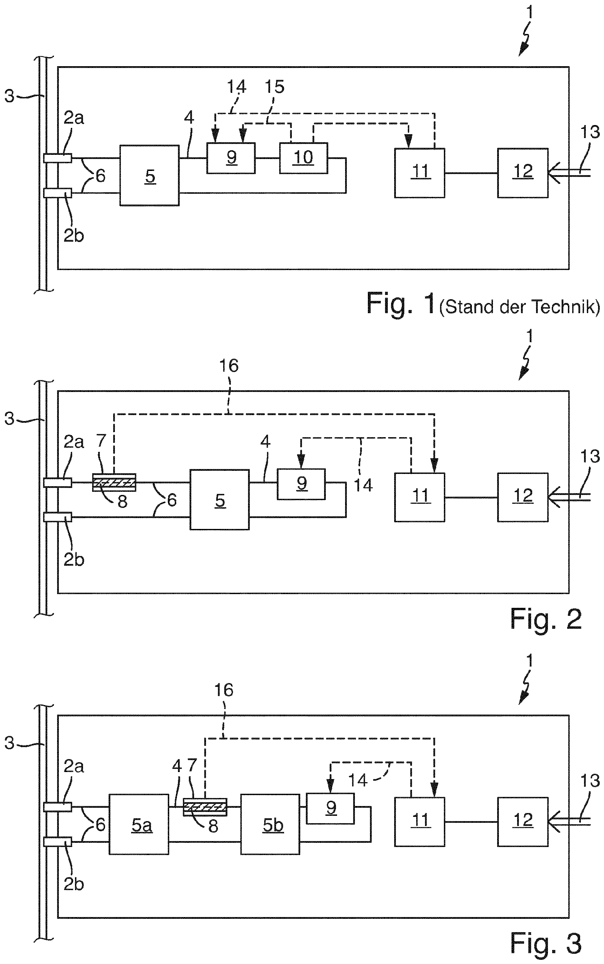

Fig. 1 zeigt ein Feldgerät das gemäß dem Stand der Technik ausgebildet ist.

Die Figur zeigt den prinzipiellen Aufbau eines Feldgerätes der Automatisierungstechnik. Die chemische oder physikalische Größe 13 ist auf einen Sensorelement 12 geführt, welches dieses in ein elektrisches Signal umwandelt. Das auf diese Weise erzeugte analoge Messsignal wird anschließend einer Recheneinheit, bspw. einem Mikroprozessor 11, zugeführt. Typischerweise wird hierfür das analoge Messsignal digitalisiert, bspw. mittels eines Analog/Digital-Konverters (nicht gezeigt). In der Recheneinheit 11 wird das Messsignal ggfl. bezüglich Linearität und Temperaturverlauf korrigiert. Ein dem Messwert entsprechender analoger Sollwert des Schleifenstroms wird mittels der Recheneinheit 11 erzeugt und einem Regelkreis zur Einstellung eines Schleifenstromes 4 in einer Zweidrahtleitung 3 (ggfl. auch einer Vierdrahtleitung), an welche das Feldgerät 1 angebunden ist, zugeführt. Zum Anschluss des Feldgerätes 1 dienen zwei Anschlussklemmen 2 (ggfl. vier Anschlussklemmen). Der Schleifenstrom 4 fließt über die erste Anschlussklemme 2a, eine Sicherheitseinrichtung 5, einen Shunt-Widerstand 10, gegebenenfalls über ein Stellglied 9 und wiederum über die Sicherheitseinrichtung 5 zurück zur zweiten Anschlussklemme 2b. Die Sicherheitseinrichtung 5 ist hierbei exemplarisch dargestellt und kann in konkreter Form sowohl EMV-Maßnahmen, also elektromagnetische Verträglichkeitsmaßnahmen, als auch Ex-Maßnahmen, also Maßnahmen in Bezug auf Richtlinien zum Explosionsschutz, aufweisen.

Das Stellglied 9 kann in einfacher Weise ein Transistor sein, auf den ein erstes Steuersignal 14 von der Recheneinheit 11 und ein zweites Steuersignal 15 von dem Shunt-Widerstand 10 geführt ist. Der Shunt-Widerstand 10 ist typischerweise durch einen Präzisionswiderstand realisiert. Die über dem Shunt-Widerstand 10 abfallende Spannung, die proportional zum Schleifenstrom 4 ist, wird der Recheneinheit 11 zugeführt und dort zur Bestimmung einer Regelabweichung von dem Sollwert des Schleifenstroms verwendet, woraufhin das Stellglied 9 entsprechend angesteuert wird. Das Stellglied 9 ist ein optionales Bauelement, das nur in dem Fall, dass das Feldgerät als Sensor fungiert vorhanden ist. In dem Fall, dass das Feldgerät als Aktor fungiert, ist kein Stellglied 9 und kein Sensorelement 12 notwendig, da nur der Schleifenstrom 4 über den Shunt-Widerstand ausgelesen wird, um den Schleifenstrom als Stellgröße verwenden zu können.

Fig. 2 zeigt eine erste Ausgestaltung des erfindungsgemäßen Feldgerätes. Das Feldgerät gemäß Fig. 2 ist als Sensor ausgebildet und weißt daher ein Sensorelement 12 auf. Auf dieses wird die Prozessgröße bzw. die physikalische Größe 13 geführt und entsprechend den Ausführungen der Figurenbeschreibung zur Fig. 1 verarbeitet. Erfindungsgemäß weist das in Fig. 2 dargestellte Feldgeräte eine Stromleseeinrichtung auf, die den Schleifenstrom 4 galvanisch getrennt rückliest und den ausgelesenen Wert mittels eines Auslesesignals 16 an die Recheneinheit 11 zurückführt. Der Stromwandler 7 ist somit nicht Teil der Leitung bzw. in die Leitung 6 integriert, sondern um diese angeordnet. In der Fig. 2 ist die durchgehende Leitung 6, um die der Stromwandler 7 gelegt ist, mittels einer Strichlinie angedeutet. Zwischen dem Stromwandler 7 und der Leitung 6 fließt somit bis zu einer vordefinierten Spannung bzw. Überschlagsspannung/Durchschlagsspannung kein elektrischer Strom. Insbesondere ist der Stromwandler 7 nicht vom Schleifenstrom 4 durchflossen. Der Stromwandler 7 ist derartig um die Leitung 6 angeordnet, dass dieser aufgrund seiner technischen Ausgestaltung den Schleifenstrom 4 kontaktlos rückliest.

Der Stromwandler 7 kann prinzipiell ein optischer, ein induktiver oder ein kapazitiver Stromwandler sein. Als besonders vorteilhaft hat sich ein induktiver und/oder kapazitiver Stromwandler herausgestellt, da dieser nicht zusätzlich mit Energie versorgt werden muss, wie es beispielsweise bei einem Optokoppler der Fall ist. Als induktive Stromwandler 7 kommen insbesondere Stromwandler 7 die auf folgenden Technologien basieren in Betracht:
- C-Type Current Transducers
- Closed Loop Hall Effekt
- Eta Technologie
- Isolation Amplifier Technologie
- IT-type Closed Loop
- Open Loop Hall Effect
- PRiME

Ferner weist der Stromwandler 7 ein Isolationsmittel 8 auf, dass sich zwischen der Leitung 3 und dem Stromwandler 7 befindet, so dass bis zu einer vordefinierten Spannung einen elektrischen Überschlag verhindert wird.

Um den Einsatz des Feldgerätes 1 in explosionsgefährdeten Bereichen zu ermöglichen, kann es vorgesehen sein, dass Abstandsvorgaben, des Stromwandlers in Bezug auf die Leitung 6, der Norm IEC DIN EN 60079 aus dem Jahr 2012 für explosionsgefährdete Bereiche entsprechen. Aus dieser Norm lassen sich für verschiedene Spannungsbereiche entsprechende Abstände entnehmen. Um nun für eine Schaltung eine vordefinierte Spannung garantieren zu können, muss das Isolationsmittel so ausgestaltet sein, dass es bis zu dieser vordefinierten Spannung einen elektrischen Überschlag verhindert. Hieraus ergeben sich Abstandsvorgaben die bei der technischen Realisierung zwischen der Leitung 6 und dem Stromwandler 7 eingehalten werden müssen.

Bei der in Fig. 2 dargestellten Ausgestaltung, befinden sich sämtliche Elemente der Sicherheitseinrichtung 5 hinter der Stromleseeinrichtung, so dass die Stromleseeinrichtung 7 zwischen den Anschlussklemmen 2 und der Sicherheitseinrichtung 5 angeordnet ist.

Fig. 3 zeigt eine zweite Ausgestaltung des erfindungsgemäßen Feldgerätes 1. Das Feldgerät gemäß Fig. 3 ist als Sensor ausgebildet und weißt daher ein Sensorelement 12 auf. Auf dieses wird die Prozessgröße bzw. die physikalische Größe 13 geführt und entsprechend den Ausführungen der Figurenbeschreibung zur Fig. 1 verarbeitet. Im Gegensatz zu der in Fig. 2 beschriebenen Ausgestaltung, befinden sich bei der in Fig. 3 beschriebenen Ausgestaltung Teile der Sicherheitseinrichtung 5a noch vor dem Stromwandler 7 und Teile der Sicherheitseinrichtung 5b hinter dem Stromwandler 7. Beispielsweise könnte eine Gasentladungsröhre, die ein Teil der Sicherheitseinrichtung 5 darstellt, und bei einem Blitzeinschlag dazu dient, die auftretenden Spitzenströme abzuleiten, noch vor dem Stromwandler 7 sitzen, umso diesen vor Überlastung zu schützen.

### Bezugszeichenliste

- 1: Feldgerät
- 2: Anschlussklemmen
- 3: Zweidrahtleitung oder Vierdrahtleitung
- 4: Schleifenstrom
- 5: Sicherheitseinrichtung
- 6: Leitung zwischen Anschlussklemme und Sicherheitseinrichtung
- 7: Stromwandler
- 8: Isolationsmittel
- 9: Stellglied
- 10: Shunt-Widerstand
- 11: Recheneinheit, bspw. Mikroprozessor
- 12: Sensorelement oder Aktorelement
- 13: Physikalische Größe bzw. Prozessgröße
- 14: Erstes Steuersignal
- 15: Zweites Steuersignal
- 16: Auslesesignal

## Patentansprüche

1. Feldgerät (1) der Automatisierungstechnik mit wenigstens zwei Anschlussklemmen (2), an denen eine Zweidrahtleitung (3) oder Vierdrahtleitung (3) anschließbar ist, so dass ein Schleifenstrom (4) über die Anschlussklemmen (2) dem Feldgerät (1) zuführbar ist, wobei in dem Feldgerät (1) eine Sicherheitseinrichtung (5) vorgesehen ist, die dazu dient, die elektromagnetische Verträglichkeit und/oder die Explosionssicherheit des Feldgerätes (1) sicherzustellen, wobei die Sicherheitseinrichtung (5) mit jeder Anschlussklemme (2) über jeweils eine in dem Feldgerät vorgesehene Leitung (6) verbunden ist, **dadurch gekennzeichnet, dass**
in dem Feldgerät (1) zumindest ein um eine der Leitungen (6) die angeordneter Stromwandler (7) vorgesehen ist, der den Schleifenstrom (4) zumindest in der einen Leitung zwischen der Sicherheitseinrichtung (5) oder Teilen der Sicherheitseinrichtung (5) und den Anschlussklemmen (2) galvanisch getrennt rückliest und einen von dem Schleifenstrom (4) abhängigen ausgelesenen Wert in Form eines Auslesesignals (16) an eine in dem Feldgerät (1) vorgesehene Recheneinheit (11) zurückführt.

2. Feldgerät nach Anspruch 1, wobei der Stromwandler ein induktiver und/oder kapazitiver Stromwandler ist.

3. Feldgerät nach Anspruch 1 oder 2, wobei in dem Feldgerät (1) zwischen der einen Leitung und dem Stromwandler (7) ein Isolationsmittel (8) vorgesehen ist, das bis zu einer vordefinierten Spannung einen elektrischen Überschlag verhindert.

4. Feldgerät nach einem oder mehreren der vorhergehenden Ansprüche, wobei Abstandsvorgaben des Stromwandlers (7) in Bezug auf die eine Leitung (6) der Norm IEC
DIN EN 60079 aus dem Jahr 2012 für explosionsgefährdete Bereiche entsprechen.

## Claims

1. Field device (1) used in automation engineering with at least two connection terminals (2) to which a two-wire line (3) or a four-wire line (3) can be connected in such a way that a loop current (4) can be fed to the field device (1) via the connection terminals (2), wherein a safety unit (5) is provided in the field device (1), said safety unit serving to ensure the electromagnetic compatibility and/or the explosion safety of the field device (1), wherein the safety unit (5) is connected to each connection terminal (2) via a line (6) provided, in each case, in the field device,
**characterized in that**
at least one current transformer (7) is provided in the field device (1), said current transformer being arranged around one of the lines (6), wherein the current transformer reads back the loop current (4) at least in the one line between the safety unit (5) or parts of the safety unit (5) and the connection terminals (2), in a galvanically isolated manner, and wherein the current transformer sends back a value, which depends on the loop current (4), in the form of a read-out signal (16) to a computing unit (11) provided in the field device (1).

2. Field device as claimed in Claim 1, wherein the current transformer is an inductive and/or capacitive current transformer.

3. Field device as claimed in Claim 1 or 2, wherein a means of isolation (8) is provided in the field device (1), between the line and the current transformer (7), which prevents an electric flashover up to a predefined voltage.

4. Field device as claimed in one or more of the previous claims, wherein spacing specifications for the current transformer (7) in relation to the one line (6) corresponding to the IEC DIN EN 60079 standard from 2012 for potentially explosive areas.

## Revendications

1. Appareil de terrain (1) de la technique d'automatisation avec au moins deux bornes de raccordement (2) auxquelles peut être raccordée une ligne à deux fils (3) ou une ligne à quatre fils (3), de sorte qu'un courant de boucle (4) peut être amené à l'appareil de terrain (1) par l'intermédiaire des bornes de raccordement (2), un dispositif de sécurité (5) étant prévu dans l'appareil de terrain (1), lequel dispositif de sécurité sert à assurer la compatibilité électromagnétique et/ou la sécurité antidéflagrante de l'appareil de terrain (1), le dispositif de sécurité (5) étant relié à chaque borne de raccordement (2) par l'intermédiaire d'une ligne (6) respective prévue dans l'appareil de terrain,
**caractérisé**
**en ce qu'**il est prévu dans l'appareil de terrain (1) au moins un transformateur de courant (7) disposé autour de l'une des lignes (6), lequel transformateur de courant relit, en étant séparé galvaniquement, le courant de boucle (4) au moins dans l'une des lignes entre le dispositif de sécurité (5) ou des parties du dispositif de sécurité (5) et les bornes de raccordement (2), et lequel transformateur de courant renvoie une valeur lue dépendant du courant de boucle (4) sous la forme d'un signal de lecture (16) à une unité de calcul (11) prévue dans l'appareil de terrain (1).

2. Appareil de terrain selon la revendication 1, pour lequel le transformateur de courant est un transformateur de courant inductif et/ou capacitif.

3. Appareil de terrain selon la revendication 1 ou 2, pour lequel il est prévu dans l'appareil de terrain (1), entre l'une des lignes et le transformateur de courant (7), un moyen d'isolation (8) qui empêche un contournement électrique jusqu'à une tension prédéfinie.

4. Appareil de terrain selon l'une ou plusieurs des revendications précédentes, pour lequel des spécifications de distance du transformateur de courant (7) par rapport à l'une des lignes (6) correspondent à la norme IEC DIN EN 60079 de 2012 pour les zones explosibles.
